# EUROPÄISCHE PATENTSCHRIFT

(11) **EP 2 674 321 B1**
(45) Veröffentlichungstag und Bekanntmachung des Hinweises auf die Patenterteilung: **17.10.2018**
(21) Anmeldenummer: 13002880.6
(22) Anmeldetag: 05.06.2013
(51) Int. Cl.: B60N 2/00

(54) **Drucksensor-Modul zum Detektieren des Belegungszustands eines Sitzes**
Pressure sensor module unit for detecting whether a seat is occupied
Module de capteur de pression destiné à détecter l'état du revêtement d'un siège

(30) Priorität: 12.06.2012 DE 202012005666 U
(43) Veröffentlichungstag der Anmeldung: 18.12.2013
(73) Patentinhaber: I.G. Bauerhin GmbH, 63584 Gründau (DE)
(72) Erfinder: Yetim, Züher, 63571 Gelnhausen (DE); Michelmann, Jochen, 63571 Gelnhausen (DE)
(74) Vertreter: Grimm, Ekkehard

(56) Entgegenhaltungen:
- EP-A1- 1 958 749
- EP-A2- 2 450 228
- EP-A2- 2 450 229

## Beschreibung

Die vorliegende Erfindung betrifft ein Drucksensor-Modul zum Detektieren des Belegungszustands eines Sitzes, insbesondere eines Kraftfahrzeugsitzes, mit einer Grundplatte, auf der mindestens ein Foliendrucksensor angeordnet ist, wobei der Foliendrucksensor einzelne Sensorelemente umfasst.

Drucksensor-Module dienen dazu, den Belegungszustand eines Sitzes, insbesondere eines Kraftfahrzeugsitzes, zu erfassen. Diese sind entweder zwischen Schaumkern und Bezug oder zwischen Schaumkern und Sitzgestell platziert. Mit diesen Drucksensor-Modulen wird erfasst, ob der jeweilige Sitz durch eine Person belegt ist oder nicht. Als mögliche Reaktion auf erkannte Sitzbelegungen können Anschnallwarnungen oder aber andere von der Sitzbelegung abhängige Funktionen gesteuert werden. Zum Beispiel ist es möglich, die Sitzheizung zu- und abzuschalten oder Sitzverstellungen freizugeben. Insbesondere ist bei dieser Sensorik darauf zu achten, dass leichtere Gegenstände wie Taschen, Mäntel oder auch schwerere Gegenstände, wie Laptops, nicht zur Aktivierung fuhren.

Das wird dadurch erreicht, dass die Empfindlichkeit der Sensorelemente so eingestellt wird, dass bis zu einem Mindestgewicht keine Auslösung erfolgt, während ab einem Personengewicht von ca. 25 kg bis ca. 46 kg eine Auslösung erfolgt.

Ein solches Drucksensor-Modul umfasst als wesentliches Bauteil mehrere druckempfindliche Sensorelemente. Diese Sensorelemente können als Foliendrucksensoren mit zwei übereinander liegenden und mittels Abstandsmaterial auf Abstand gehaltenen Folien ausgeführt sein.

Das Dokument EP 1 958 749 A1, das als nächstkommender Stand der Technik anzusehen ist, beschreibt ein Drucksensor-Modul für den Einbau in einen Fahrzeugsitz. Der eingesetzte Sensor besitzt eine erste Platte, die durch eine zweite Platte abgedeckt ist. Zwischen den beiden Platten befindet sich ein Sensorelement mit mehreren Sensorzellen, die aktiviert werden, wenn Druck auf die zweite Platte ausgeübt wird. Die zweite Platte kann um ein Gelenk geschwenkt und dadurch aufgeklappt werden, um zwischen die Platten das Sensorelement einzusetzen.

Derartige Sensoren sind auch aus der DE 42 37 072 C1 bekannt. Dort werden resistive Foliendrucksensoren mit mehreren Sensorelementen beschrieben, die aus zwei zusammenlaminierten Polymerlagen aufgebaut sind. Dort kann der Sitzbelegungssensor unter anderem auch zwischen der Gummihaarmatte und einem Federrahmen des Sitzes oder unmittelbar oberhalb einer Sitzschale angeordnet sein.

Bei der Anwendung von Foliendrucksensoren als Detektionssystem für die Insassenerkennung werden vermehrt Sensoren eingesetzt, bei denen das Sensorsystem nicht, wie bei den sonst üblichen Foliendrucksensoren, auf der Oberseite des Sitzes unmittelbar unter dem Bezug positioniert ist, sondern unter dem Sitzkissen zwischen dem Schaumstoff und dem Federrahmen des Sitzgestells oder dem Sitzgestell selbst positioniert ist. Mit der Positionierung, weg von der Sitzoberfläche, unter den Schaumkern gewinnt man mehr Freiheit, die Oberfläche des Sitzes nach Wunsch der Designer zu gestalten, ohne auf die Sensorik Rücksicht nehmen zu müssen. Auch sind technische Zusatzfunktionen, wie Klimatisierung oder Sitzheizung, einfacher zu integrieren. Ein weiterer Vorteil ist den Sensor zu verkleinern, da die Schaumkerne in der Regel eine Krafteinleitung der aufsitzenden Person in das Sitzgestell erzeugen, die es erlaubt, die Sensorfläche erheblich zu verkleinern und den Sensor damit kostengünstiger herzustellen.

Die DE 197 52 976 A1 beschreibt einen Foliensensor, der zwischen Schaumkern und Sitzgestell in einer Schaumaussparung angebracht wird und so den Sitzkomfort nicht beeinflusst und darüber hinaus durch die eingeschränkte Bewegung der Schaumkernunterseite im Verhältnis zu der Schaumkernoberseite sehr langlebig ist.

Die DE 20 2010 003 563 U1 zeigt schließlich ein Drucksensor-Modul mit einem Foliensensor, welcher Verbindungselemente zum Verbinden an die Sitzstruktur aufweist. Auch hier wird die Unabhängigkeit von Sitzbezug, Sitzgräben oder der Sitzheizung als Vorteil genannt.

Die bestehenden Systeme mit Foliensensoren haben jedoch den Nachteil dass die aktive Detektionsfläche der einzelnen Sensoren des Foliensensors relativ klein ist. Da die Sensorgröße, also der Durchmesser eines beispielsweise runden Sensorelements, direkt mit der Empfindlichkeit des Elements selbst zusammenhängt, ist die Detektionsfläche nicht unabhängig von der Sensorempfindlichkeit zu verändern. Daraus resultiert eine Maximalgröße der Sensoren, die nur schwer zu vergrößern ist. Wäre die Druckverteilung konstant über die gesamte an Sitzgestell anliegenden Schaumkernfläche, was in der Regel nur bedingt zutrifft, so wäre die Kraft auf den Sensor nur durch das Flächenverhältnis und das Gewicht der aufsitzenden Person bestimmt.

Letztendlich ergeben sich dadurch Auslösekräfte auf die Sensoren selbst, die im Verhältnis zum Gewicht der aufsitzenden Person klein sind. Durch die relativ kleinen Sensorflachen und die geringen Auslösekräften ist eine flache, ebene Oberfläche des Schaumkerns im Bereich des Sensors von entscheidender Bedeutung, Jeder Fremdkörper und jede Unregelmäßigkeit der Oberfläche, wie Falten, Lunker oder Blasen, führt zur Veränderung der Empfindlichkeit.

Ein weiterer Nachteil ist die Temperaturabhängigkeit derartiger Foliensensoren. Durch den Kunststoff, welcher in der Regel bei Temperaturanstieg weicher wird, ergeben sich bei Temperaturanstieg höhere Empfindlichkeiten, da die beiden Ebenen der mit leitfähigen Pasten bedruckten und durch einen Spacer beabstandeten Folien nun leichter und mit weniger Kraft zur Berührung und damit in elektrischen Kontakt gebracht werden können.
Es hat sich gezeigt, dass bei der Herstellung des Schaumkerns gerade an dessen Unterseite, die im Schäumprozess oben in der Schäumform zu liegen kommt, besonders viele Lunker und Löcher zur Ausbildung kommen.

Auch beim Verbau auf ein Sitzgestell können durch die damit verbundenen Kräfte Falten auf der Oberfläche des Schaumkerns im Bereich des Sensors entstehen. Wird ein Vlies zur mechanischen Verstärkung des Schaumkerns mit in die Schäumform eingelegt, so kann dieses eine zusätzliche Faltenbildung auch im Bereich des Sensors verursachen.
Der vorliegenden Erfindung liegt nun die Aufgabe zugrunde, eine Belegungserfassungseinrichtung zum Detektieren des Belegungszustands eines Sitzes zu schaffen, die von der Oberfläche des Polsterkerns eines Sitzes möglichst unabhängig ist und über einen weiten Temperaturbereich funktionsfähig ist und bei der die Teile zusammenwirken, ohne dass die Funktion beeinträchtigt wird.

Die vorliegende Aufgabe wird durch ein Drucksensor-Modul mit den Merkmalen des Anspruchs 1 gelöst. Vorteilhafte Ausgestaltungen des Drucksensor-Moduls ergeben sich aus den abhängigen Ansprüchen.

Das Drucksensor-Modul, das zum Detektieren des Belegungszustands eines Sitzes, insbesondere eines Kraftfahrzeugsitzes, vorgesehen ist, weist eine Grundplatte auf, auf der mindestens ein Foliendrucksensor angeordnet ist, mit mindestens einer abdeckenden, stauchbaren Zwischenschicht, die entweder zwischen der Grundplatte und dem Foliendrucksensor oder auf der der Grundplatte gegenüberliegenden Seite des Foliendrucksensors angeordnet ist. Eine solche Zwischenschicht kann, falls dies erforderlich ist, auch auf beiden Seiten des Foliendrucksensors vorgesehen werden. Darüber hinaus ist der Foliendrucksensor auf seiner der Grundplatte gegenüberliegenden Seite durch ein Abdeckelement in Form einer Abdeckplatte abgedeckt, die, falls auf dieser Seite des Foliendrucksensors eine Zwischenschicht vorgesehen ist, diese Zwischenschicht abdeckt. Dieses Drucksensor-Modul kann durch Verbindungselemente, die an der Grundplatte vorgesehen sind, auf der der Sitzfläche des Kraftfahrzeugsitzes abgewandten Seite eines Sitzpolsters an der tragenden Struktur des Sitzes befestigt werden oder am Schaumkern oder Polsterelement angebracht sein. Ein wesentlicher Aspekt der Erfindung besteht nun darin, dass das Abdeckelement aus einer formstabilen Abdeckplatte gebildet ist. Diese Abdeckplatte ist in Richtung senkrecht zu der Ebene des Foliendrucksensors beweglich geführt und in den Richtungen senkrecht dazu in der Lage fixiert.

Da diese Abdeckplatte in Richtung der Normalen der Ebene des Sensors beweglich ausgeführt ist, kann diese den Teil des Drucks, der durch eine auf dem Sitz sitzenden Person über den Polsterkern beziehungsweise Schaumkern auf die Fläche der Abdeckplatte ausgeübt wird, weiter an die darunter liegende Struktur geben.

Dabei werden durch die Formstabilität der Abdeckplatte lokal unterschiedliche Kräfte und damit Druckverteilungen gemittelt. Die darunter liegende stauchbare Zwischenschicht mit einer bestimmten Stauchhärte erfährt damit eine Bewegung oder Komprimierung, die über die Stauchhärte nur von der Summe beziehungsweise dem Integral der Drücke auf der Plattenoberfläche abhängig ist. Damit werden Druckspitzen gemittelt und Fehlstellen oder Unregelmäßigkeiten der Schaum- oder Polsterkernstruktur ausgeglichen.

Ein weiterer Vorteil der Erfindung ist der nunmehr geringere Einfluss des Materials der Foliendrucksensoren auf die Auslöseschwelle zugunsten des Einflusses komprimierbaren Zwischenschicht auf die Auslöseschwelle. Je härter diese Zwischenschicht ist, desto mehr Kraft wird auf der Deckplatte benötigt, um das System zum Auslösen zu bringen.

Es ist nun möglich, den Empfindlichkeitsanstieg bei Temperaturerhöhung durch weicher werdende Folien zu vermindern oder sogar auszugleichen indem die Stauchhärte der stauchbaren Zwischenschicht weniger temperaturabhängig oder sogar umgekehrt proportional zur Erweichung der Folien eingestellt werden kann. Erreicht wird das durch Einsetzen von geschäumten Materialien, deren Kunststoffe hohe Schmelz- oder Zersetzungspunkte aufweisen, wie beispielsweise Silicon- oder Polyurethanschäume.

Um den Krafteintrag gleichmäßig auf die stauchbare Zwischenschicht zu gewährleisten, muss die Abdeckplatte in Ihrer Formgebung, Stabilität und Führung gewisse Anforderungen erfüllen.

Die Abdeckplatte wird an der Grundplatte durch mindestens einen Stift in Richtung senkrecht zu der Ebene des Foliendrucksensors geführt. Durch diesen mindestens einen Stift wird die Bewegungsfreiheit der Abdeckplatte so eingeschränkt, dass sich die Abdeckplatte in Richtung senkrecht zu der Ebene des Foliendrucksensors bewegen kann und somit in dieser Richtung beweglich geführt ist, während gleichzeitig der mindestens eine Stift dazu beiträgt, die Abdeckplatte in den Richtungen senkrecht dazu in der Lage zu fixieren.

Der mindestens eine Stift kann entweder an der formstabilen Abdeckplatte oder an der Grundplatte angeordnet sein; er wird an dem jeweils anderen Teil in einer Öffnung geführt, so dass er sich entsprechend verschieben kann.

Ein solcher Stift kann gleichzeitig dazu dienen, die Abdeckplatte an der Grundplatte zu sichern, indem sich der Stift in oder an der Öffnung verhakt und so die Abdeckplatte gegen ein Lösen von der Grundplatte sichert.

Eine Bewegung der Abdeckplatte senkrecht zur Ebene des Foliendrucksensors ist mechanisch begrenzt.

Ein entsprechendes Verhaken des jeweiligen Stifts kann dadurch erfolgen, dass das freie Ende des Stifts durch Federarme mit Rastelementen gebildet ist, wobei sich diese Rastelemente in oder an der zugeordneten Öffnung verhaken.

Bevorzugt wird der mindestens eine Stift oder werden mehrere dieser Stifte an der Abdeckplatte angeordnet.

Der mindestens eine Stift oder mehrere dieser Stifte sollten im Randbereich der Abdeckplatte angeordnet sein.

Falls mehrere Stifte vorgesehen sind, um die Abdeckplatte an der Grundplatte zu lagern und schwimmend zu führen, sollten diese Stifte in Bezug auf eine Mittellinie der Grundplatte oder der Abdeckplatte asymmetrisch verteilt sein, so dass die Orientierung der Abdeckplatte zu der Grundplatte bei der Montage eindeutig zugeordnet ist.

In einer weiteren Ausgestaltung ist zwischen Abdeckplatte und Grundplatte mindestens ein federndes Element eingebracht, das bei Druckbelastung einfedert und im unbelasteten Zustand für mechanische Entlastung des Foliendrucksensors sorgt.

Auch ist es möglich, dass der mindestens eine Stift mit federnden Eigenschaften ausgelegt ist, so dass im zusammengebauten Zustand die Abdeckplatte auf Abstand zu dem Foliendrucksensor gehalten ist und erst bei einer auf den Foliendrucksensor und dessen mindestens einen Sensorelement ein Druck ausgeübt wird und es somit zu keiner Früh- oder Fehlauslösung kommen kann. Um diese federnden Eigenschaften zu erhalten, kann beispielsweise der Stift von einem Federelement, beispielsweise einer Schraubenfeder, oder einer elastischen Hülse, beispielsweise einer Gummihülse, umgeben sein.

Die Abdeckplatte soll bei den auftretenden Belastungen, die über eine auf dem Sitz sitzenden Person und den Polsterkern auf die Abdeckplatte ausgeübt werden, eine hohe Formstabilität aufweisen, um dadurch einen entsprechenden Druck auf die Sensorelemente des Foliendrucksensors auszuüben. Um diese Biegesteifigkeit und Formstabilität zu gewährleisten, wird die Abdeckplatte vorzugsweise aus Metall oder einem Kunststoffmaterial in einer entsprechenden Dicke gebildet. Falls die Abdeckplatte aus einem Kunststoffmaterial gebildet wird, wird bevorzugt ein Polyamid (PA) eingesetzt, wie beispielsweise PA6 oder PA66 oder PA46, auch mit Glasfaseranteil. Bevorzugt wird das Polyamid 46 (PA46) eingesetzt. Vorteile von dem bevorzugten Material sind unter anderem, dass es eine Wärmeformbeständigkeit von 190 °C und glasfaserverstärkte Typen bis zu 290 °C erreicht. Im Vergleich mit anderen technischen Kunststoffen, wie PA6 und PA66, thermoplastischen Polyestern und teilaromatisierten Polyamiden (PPA), resultieren daraus wiederum auch entscheidende Vorteile hinsichtlich der mechanischen Eigenschaften bei erhöhten Temperaturen. Die Dicke der Abdeckplatte sollte 0,5 mm bis 2,5 mm, vorzugsweise 1 mm bis 2 mm, betragen.

Wie bereits erwähnt, kann die mindestens eine Zwischenschicht zwischen Grundplatte und Foliendrucksensor oder zwischen Foliendrucksensor und Abdeckplatte angeordnet werden. Auch ist eine Ausführungsform vorgesehen, bei der beide Seiten des Foliendrucksensors durch jeweils eine Zwischenschicht abgedeckt sind. Eine stauchbare Zwischenschicht ist notwendig, damit das mindestens eine Sensorelement auslöst und funktioniert, indem die Zwischenschicht das Sensorelement eindrückt. Dabei ist es unerheblich, ob die stauchbare Zwischenschicht über oder unter dem Foliendrucksensor angeordnet ist. Wird die Zwischenschicht über und unter den Foliendrucksensor angeordnet, reagiert der Foliendrucksensor empfindlicher. Die Zwischenschicht kann aus einem geschäumten Kunststoff bestehen. Darüber hinaus kann die Zwischenschicht in Dickenrichtung unterschiedliche Stauchhärten aufweisen. Die Dickenrichtung der Zwischenschicht ist die Richtung, die sich senkrecht zur Ebene des Foliendrucksensors erstreckt.

Die Zwischenschicht kann im Bereich unter der Abdeckplatte eine Fläche aufweisen, die gegenüber der Fläche der Abdeckplatte verkleinert und/oder ausgespart ist, so dass sich beispielsweise in den Bereichen der Sensorelemente eine kreuzförmige oder sternförmige Form der Zwischenschicht ergibt. Durch eine solche Form der Zwischenschicht kann die Empfindlichkeit des Foliendrucksensors eingestellt werden; je kleiner die Fläche der Zwischenschicht ist bzw. der Größe der Sensorelemente angepasst ist, desto größer ist die Empfindlichkeit der Sensorelemente.

Weiterhin können an der Grundplatte weitere Positionierungs- und/oder Verbindungselemente vorgesehen werden, mittels denen die Grundplatte an der tragenden Struktur eines Sitzes verbindbar ist. Bevorzugt ist zumindest ein Teil dieser Positionierungs- und/oder Verbindungselemente durch Halter gebildet, die sich an dem Drahtgestell eines Sitzes festklemmen. Mit diesen Positionierungselementen kann die Moduleinheit in einer definierten Orientierung zu dem Sitz befestigt werden und behält diese Orientierung auch bei Bewegungen des Polsterkerns bei.

In einer möglichen Ausgestaltungsform weist der Foliendrucksensor Sensorelemente mit unterschiedlicher Empfindlichkeit auf.

Zwischen dem Foliendrucksensor und der Abdeckplatte oder zwischen der Grundplatte und dem Foliendrucksensor ist eine zumindest teilweise vollflächig aufgebrachte Klebeschicht angeordnet, die die Abdeckplatte oder die Grundplatte mit dem Foliendrucksensor verbindet.

In einer bevorzugten Ausgestaltung weist die zumindest teilweise vollflächig aufgebrachte Klebefläche im Bereich der einzelnen Sensorelemente des Foliendrucksensors Aussparungen auf, um dadurch eine entsprechende Vorlast auf die Sensorelemente des Foliendrucksensors zu verhindern bzw. zu minimieren. Die Größe der ausgesparten Klebefläche ist abhängig von der Größe des aktiven Bereichs des Sensorelements. Die Form der ausgesparten Klebefläche kann der Form der einzelnen Sensorelemente des Foliendrucksensors entsprechen, ist jedoch nicht zwingend notwendig. Als Klebermaterial kann ein doppelseitiges Klebeband oder aber auch ein Transferklebeband verwendet werden. Gute Eigenschaften zeigt das Klebermaterial, das auf Basis eines Reinacrylat-Klebstoffs besteht.

Mittels dieser zumindest teilweisen Verklebung, zwischen dem Foliendrucksensor und der Abdeckplatte oder zwischen der Grundplatte und dem Foliendrucksensor wird unter anderem verhindert, dass sich Fremdkörper auf oder unter dem Foliendrucksensor ansammeln können und es somit zu keiner Fehl- oder Frühauslösung führt.

In einer weiteren Ausführungsform ist zwischen dem Foliendrucksensor und der Abdeckplatte eine zumindest teilweise vollflächig aufgebrachte Klebeschicht angeordnet, die die Abdeckplatte mit dem Foliendrucksensor verbindet. Hierbei ist nicht die Klebeschicht im Bereich der Sensorelemente ausgespart, sondern die Abdeckplatte weist auf der in Richtung Foliendrucksensor weisenden Seite Vertiefungen auf, die in die Richtung des Foliendrucksensors abgewandten Seite eingelassen sind, um dadurch eine entsprechende Vorlast auf die Sensorelemente des Foliendrucksensors zu verhindern bzw. zu minimieren. Die Anzahl der Vertiefungen hängt von der Anzahl der Sensorelemente, die der Foliendrucksensor umfasst, ab. Die mindestens eine Vertiefung in der Abdeckplatte weist eine Tiefe auf, die mindestens der Dicke der Klebeschicht entspricht. Die Form der Vertiefung in der Abdeckplatte kann der Form der einzelnen Sensorelemente des Foliendrucksensors entsprechen, ist jedoch nicht zwingend notwendig.

Unter Vorlast versteht man einen, im unbelegten Zustand des Fahrzeugsitzes, durch den Schaumkern und die Bezugsspannung verursachten, Druck, der auf die Sensorelemente des Foliendrucksensors wirkt.

In einer weiteren Ausgestaltungsform sind die Sensorelemente des Foliendrucksensors in Gruppen mit unterschiedlicher Empfindlichkeit zusammengefasst und mittels Reihen- oder Parallelschaltung verschaltet. Mit einer solchen Anordnung ist es möglich, noch stabilere Detektionsergebnisse zu erhalten.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: ein Drucksensor-Modul gemäß der Erfindung in einer Explosionsdarstellung,
- Figur 2: die Abdeckplatte des Drucksensor-Moduls der Figur 1 in einer perspektivischen Ansicht auf deren Unterseite,
- Figur 3: das Drucksensor-Modul der Figur 1, bei dem gegenüber der Ausführungsform der Figur 1 eine Zwischenschicht zwischen Foliendrucksensor und Abdeckplatte angeordnet ist,
- Figur 4: das Drucksensor-Modul der Figur 1, bei dem gegenüber der Ausführungsform der Figur 1 die Form der Zwischenschicht an die Größe und Lage von Sensorelementen des Foliendrucksensors angepasst sind,
- Figur 5: eine weitere Ausführungsform eines Drucksensor-Moduls, vergleichbar den in den Figuren 1 und 3 gezeigten Ausführungsformen, jedoch mit zwei Zwischenschichten, die den beiden Seiten des Foliendrucksensors zugeordnet sind, und
- Figur 6: ein Drucksensormodul entsprechend der Figur 4 mit einer zusätzlichen Klebeschicht.

Soweit in den einzelnen Figuren für die verschiedenen Bauteile dieselben Bezugszeichen verwendet werden, so können die entsprechenden Ausführungen zu einer Figur analog auf die anderen Figuren übertragen werden.

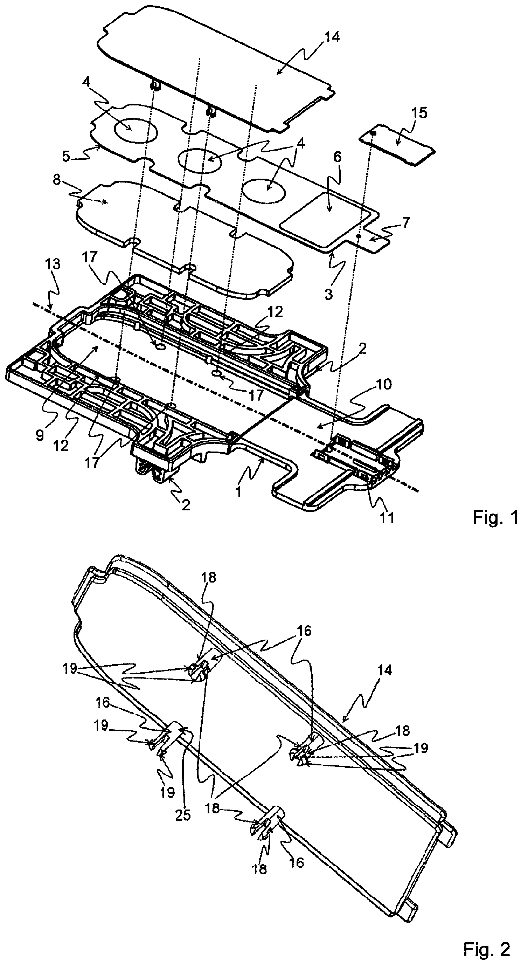

Das Drucksensor-Modul, wie es in Figur 1 dargestellt ist, dient zum Detektieren des Belegungszustands eines Sitzes und wird vorzugsweise in Sitzen für Kraftfahrzeuge eingesetzt. Dieses Drucksensor-Modul ist dazu ausgelegt, dass es auf dem Sitzgestell eines Fahrzeugsitzes angeordnet werden kann. Vorzugsweise wird das Drucksensor-Modul auf das Draht- oder Federgestell des Sitzes aufgelegt und daran fixiert.

Das Drucksensor-Modul besitzt eine Grundplatte 1, die aus einem im Wesentlichen formstabilen Material, zum Beispiel PA66 oder PA6 oder PP, bevorzugt PA66 mit Glasfaseranteil (GF) oder PA6+GF oder PP+GF, gebildet ist. Auch kann die Grundplatte 1 aus einer dünnen Metallplatte gefertigt werden. An der Unterseite dieser Grundplatte 1 befinden sich Positionierungs- und/oder Verbindungselemente oder auch Halter 2, mit denen die Grundplatte 1 an einem nicht dargestellten Sitzgestell so befestigt werden kann, dass sie sich auch unter wiederholter Benutzung des Sitzes nicht verschiebt oder von dem Sitzgestell löst.

Auf der Oberseite der Grundplatte 1 ist ein Foliendrucksensor 3 angeordnet, der in dem gezeigten Beispiel drei einzelne Sensorelemente 4 umfasst. Diese Sensorelemente 4 sind einem ersten Abschnitt 5 zugeordnet. An dem einen Ende dieses ersten Abschnitts 5 schließt sich ein zweiter Abschnitt 6 an, der in einem Anschlussabschnitt 7 endet.

Zwischen Grundplatte 1 und Foliendrucksensor 3 ist eine Zwischenschicht 8 zwischengefügt. Diese Zwischenschicht 8 ist so dimensioniert, dass sie sich in eine wannenartige Vertiefung 9, die in der Oberseite der Grundplatte 1 ausgebildet ist, einlegt.

Die wannenartige Vertiefung 9 sowie die Zwischenschicht 8 sind wiederum so dimensioniert, dass sich darauf nur der erste Abschnitt 5 mit den Sensorelementen 4 auflegt. Dagegen liegt der zweite Abschnitt 6 des Foliendrucksensors 3 unmittelbar auf einer Anschlussfläche 10 der Grundplatte 1 auf, während sich der Anschlussabschnitt 7 in ein entsprechendes Befestigungsteil 11 der Grundplatte 1 einlegt, um dort die Sensorelemente 4 mit Anschlussleitungen zu verbinden. Dieses Befestigungsteil 11 wird durch eine kleine Platte 15 verschlossen.

Die Dicke der Zwischenschicht 8 und/oder die Tiefe der wannenartigen Vertiefung 9 sind so gewählt, dass der auf der Zwischenschicht 8 aufliegende Foliendrucksensor 3, der in seinen Abmessungen der Größe der wannenartigen Vertiefung 9 entspricht, noch zwischen den die wannenartige Vertiefung 9 begrenzenden Stege 12 einliegt. Hierdurch ist eine seitliche Bewegung des Foliendrucksensors 3 nicht möglich. Auch ist die Größe der Zwischenschicht 8, die in der Ausführungsform der Figur 1 zwischen der Grundplatte 1 und dem Foliendrucksensor 3 zwischengefügt ist, so gewählt, dass sie der Größe des Foliendrucksensors 3 und damit auch der Größe der wannenartigen Vertiefung 9 entspricht.

Das in den Figuren dargestellte Drucksensor-Modul ist dazu vorgesehen, dass es mit der Symmetrieachse, mit Bezugszeichen 13 bezeichnet, in Fahrtrichtung eines Fahrzeugs auf einem Sitzgestell angeordnet wird.

Der Foliendrucksensor 3 ist auf der der Grundplatte 1 abgewandten Seite durch eine formstabile Abdeckplatte 14 abgedeckt. Die Abdeckplatte 14 ist entsprechend des ersten Abschnitts 5 des Foliendrucksensors 3 so dimensioniert, dass sie zumindest die Sensorelemente 4 des Foliendrucksensors 3 abdeckt und sich, ebenso wie der erste Abschnitt 5 des Foliendrucksensors 3, in die wannenartige Vertiefung 9 der Grundplatte 1, begrenzt durch die Stege 12, einlegt.

Die Abdeckplatte 14, die in Figur 2 in einer vergrößerten Darstellung mit Sicht auf deren Unterseite gezeigt ist, ist in dem Drucksensor-Modul bzw. an der Grundplatte 1 in Richtung senkrecht zu der Ebene des Foliendrucksensors 3 beweglich geführt, wozu an der Unterseite der Abdeckplatte 14 mehrere Stifte 16 angeordnet sind.

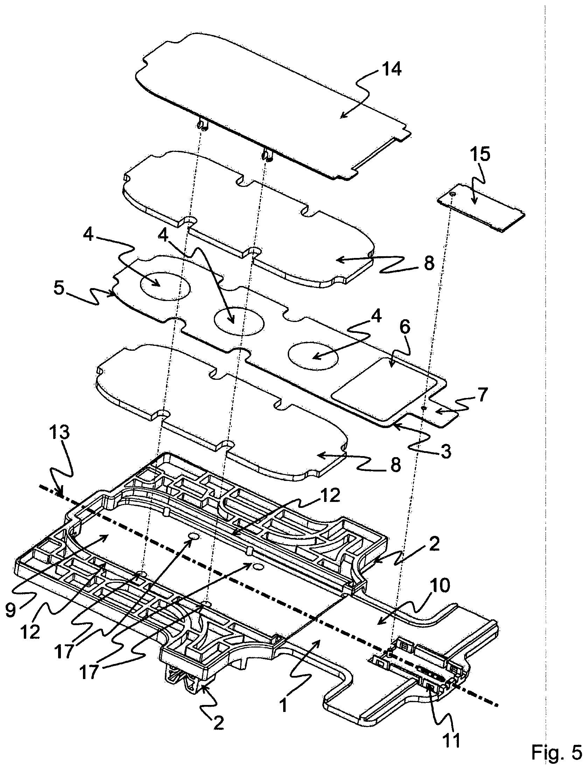

Diese Stifte 16 greifen in Öffnungen 17 in der Grundplatte 1 ein. Die Enden der Stifte 16 sind geschlitzt, so dass jeweils zwei Federarme 18 vorhanden sind, die wiederum am Ende nach außen vorstehende Rastelemente 19 aufweisen. Diese Rastelemente 19 hintergreifen die Rückseite der Grundplatte 1 im Bereich der Öffnungen 17, wenn die Abdeckplatte 14 über die Stifte 16 an der Grundplatte 1 befestigt sind, und sichern so die Abdeckplatte 14 gegen ein Lösen von der Grundplatte 1. Die Länge der Stifte 16 ist so gewählt, dass die Zwischenschicht 8 oder die Zwischenschichten, falls mehrere vorhanden sind, wie dies noch nachfolgend anhand der Figur 5 beschrieben wird, nicht zusammengedrückt oder vorgespannt wird oder werden.

In den Richtungen senkrecht zu den Stiften 16 wird die Abdeckplatte 14 durch die die wannenartige Vertiefung 9 begrenzenden Stege 12 in der Lage fixiert, allerdings so, dass sich die Abdeckplatte 14 noch frei in Richtung der Stifte 16 bewegen kann.

Im Gegensatz zu der gezeigten Ausführungsform können die Stifte 16, oder ein Teil der Stifte 16, auch an der Grundplatte 1 vorgesehen werden, wobei dann die dem jeweiligen Stift 16 zugeordnete Öffnung 17 in der Abdeckplatte 14 ausgebildet ist.

Damit sich die Stifte 16 außerhalb der Wirkungsfläche der Sensorelemente 4 des Foliendrucksensors 3 befinden, sind sie im Randbereich der Abdeckplatte 14 angeordnet.

Die Stifte 16 sollten in Bezug auf eine Mittellinie bzw. die Symmetrieachse 13 der Grundplatte 1 asymmetrisch verteilt sein, so dass die Abdeckplatte 14 nur in einer eindeutigen Orientierung an der Grundplatte 1 befestigbar ist.

Weiterhin können die Stifte 16 mit federnden Eigenschaften ausgestattet werden, um dadurch die Abdeckplatte 14 im nicht belegten Zustand des Sitzes auf Abstand zu den Sensorelementen zu halten. Diese federnden Eigenschaften können beispielsweise durch Schraubenfedern 25, wie eine solche, die an dem einen Stift 16 angedeutet ist, oder aber alternativ dazu durch eine nicht dargestellte Gummihülse, die anstelle der Schraubenfeder 25 auf den Stift 16 aufgesteckt wird, erreicht werden.

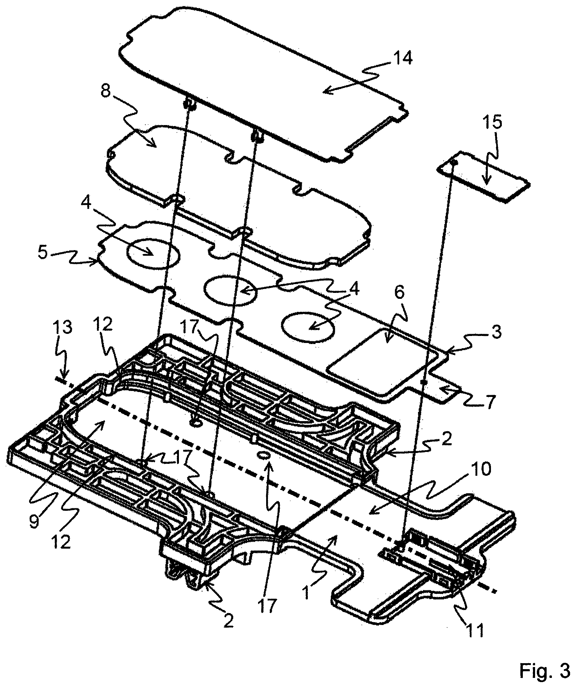

Während in der Ausführungsform der Figur 1 die Zwischenschicht 8 zwischen Grundplatte 1 und Foliendrucksensor 3 angeordnet ist, zeigt die Figur 3 eine Ausführungsform, bei der die Zwischenschicht 8 zwischen der Abdeckplatte 14 und dem Foliendrucksensor 3 zwischengefügt ist.

Dagegen zeigt Figur 5 eine weitere Ausführungsform eines Drucksensor-Moduls, bei dem zwei Zwischenschichten 8 eingesetzt sind, die den beiden Seiten des Foliendrucksensors 3 zugeordnet sind.

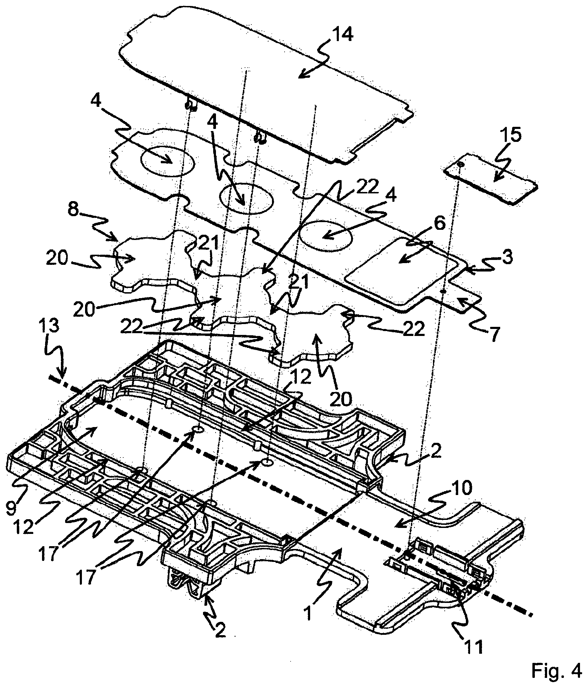

Schließlich zeigt die Figur 4 ein Drucksensor-Modul, bei dem gegenüber der Ausführungsform der Figur 1 die Form der Zwischenschicht 8 an die Größe und Lage der Sensorelemente 4 des Foliendrucksensors 3 angepasst ist. Diese Zwischenschicht 8, wie sie in Figur 4 gezeigt ist, umfasst verkleinerte und/oder ausgesparte Flächen 20, die jeweils gleich oder etwas kleiner sein können als die Flächen der Sensorelemente 4. Diese verkleinerten und/oder ausgesparten Flächen 20 sind in Richtung einer gedachten Verbindungslinie zwischen den jeweiligen Sensorelementen 4 über schmale Verbindungsstege 21 miteinander verbunden. Weiterhin setzt senkrecht zu dieser gedachten Verbindungslinie an beiden Seiten jeder Fläche 20 jeweils eine stegförmige Fläche 22 an, wodurch zwischen diesen stegförmigen Flächen 22 jeweils freie Aussparungen verbleiben. Durch diese Form der Zwischenschicht 8 kann der über die Zwischenschicht 8 auf die Sensorelemente 4 des Foliendrucksensors 3 ausgeübte Druck eingestellt werden, wodurch wiederum die Empfindlichkeit des Foliendrucksensors skaliert werden kann; durch eine kleinere Fläche der Zwischenschicht 8 wird die Empfindlichkeit der Sensorelemente 4 erhöht.

Bei den beschriebenen Drucksensor-Modulen, die als Detektionssysteme für den Belegungszustand der Sitze dienen, handelt es sich um so genannte B-Seiten-Sensoren.

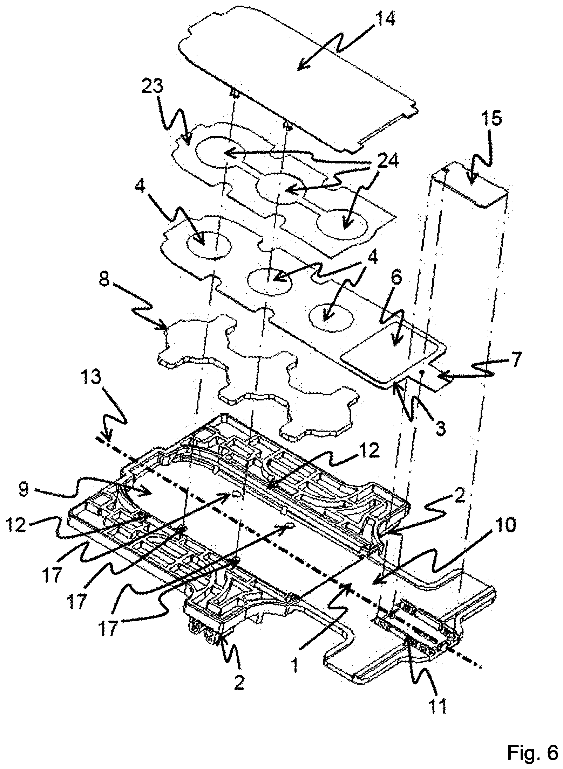

Die Figur 6 zeigt ein Drucksensor-Modul, wie es in Figur 4 dargestellt ist, jedoch mit dem Unterschied gegenüber der Ausführungsform der Figur 4, dass zwischen der Abdeckplatte 14 und dem Foliendrucksensor 3 eine doppelseitig klebende Klebeschicht 23 zwischengefügt ist, die die Abdeckplatte 14 mit dem Foliendrucksensor 3 verbindet. Im Bereich der einzelnen Sensorelemente 4 des Foliendrucksensors 3 sind in der Klebeschicht 23 Aussparungen 24 vorgesehen, so dass die Sensorelemente 4 im Ruhezustand nicht ausgelöst werden; es wird durch diese Aussparungen 24 verhindert, dass auf die Sensorelemente im unbelegten Zustand des Fahrzeugsitzes bereits Druck ausgeübt wird.

## Patentansprüche

1. Drucksensor-Modul zum Detektieren des Belegungszustands eines Sitzes, insbesondere eines Kraftfahrzeugsitzes, mit einer Grundplatte (1), auf der mindestens ein Foliendrucksensor (3) angeordnet ist, wobei der Foliendrucksensor (3) einzelne Sensorelemente (4) umfasst, mit mindestens einer abdeckenden, stauchbaren Zwischenschicht (8) und mit einem den Foliendrucksensor (3), auf seiner der Grundplatte (1) gegenüberliegenden Seite, überdeckenden Abdeckelement, wobei das Abdeckelement aus einer formstabilen Abdeckplatte (14) gebildet ist, die in Richtung senkrecht zu der Ebene des Foliendrucksensors (3) beweglich geführt ist und in den Richtungen senkrecht dazu in der Lage fixiert ist, und wobei die Abdeckplatte (14) an der Grundplatte (1) durch mindestens einen Stift (16) in Richtung senkrecht zu der Ebene des Foliendrucksensors (3) geführt ist.

2. Drucksensor-Modul nach Anspruch 1, **dadurch gekennzeichnet, dass** der mindestens eine Stift (16) an dem jeweils anderen Teil in einer Öffnung (17) geführt ist.

3. Drucksensor-Modul nach Anspruch 1 oder 2, **dadurch gekennzeichnet, dass** das freie Ende des mindestens einen Stifts (16) durch Federarme (18) mit Rastelementen (19) gebildet ist, wobei sich die Rastelemente (19) in oder an der zugeordneten Öffnung (17) verhaken.

4. Drucksensor-Modul nach einem der Ansprüche 1 bis 3, **dadurch gekennzeichnet, dass** der mindestens eine Stift im Randbereich der Abdeckplatte (14) angeordnet ist

5. Drucksensor-Modul nach einem der Ansprüche 1 bis 4, **dadurch gekennzeichnet, dass** die Abdeckplatte (14) aus Kunststoff gebildet ist

6. Drucksensor-Modul nach einem der Ansprüche 1 bis 5, **dadurch gekennzeichnet, dass** die mindestens eine Zwischenschicht (8) zwischen Grundplatte (1) und Foliendrucksensor (3) oder zwischen Foliendrucksensor (3) und der Abdeckplatte (14) angeordnet ist.

7. Drucksensor-Modul nach einem der Ansprüche 1 bis 6, **dadurch gekennzeichnet, dass** die Zwischenschicht (8) in Dickenrichtung unterschiedliche Stauchhärten aufweist.

8. Drucksensor-Modul nach einem der Ansprüche 1 bis 7, **dadurch gekennzeichnet, dass** die Zwischenschicht (8) im Bereich des jeweiligen Sensorelements (4) eine Fläche aufweist, die gegenüber der Fläche der Abdeckplatte (14) verkleinert und/oder ausgespart (20, 21, 22) ist.

9. Drucksensor-Modul nach einem der Ansprüche 1 bis 8, **dadurch gekennzeichnet, dass** der Foliendrucksensor (3) Sensorelemente (4) unterschiedlicher Empfindlichkeit aufweist.

10. Drucksensor-Modul nach Anspruch 9, **dadurch gekennzeichnet, dass** die Sensorelemente (4) unterschiedlicher Empfindlichkeit in Gruppen zusammengefasst und mittels Reihen- und Parallelschaltung verschaltet sind.

11. Drucksensor-Modul nach einem der Ansprüche 1 bis 10, **dadurch gekennzeichnet, dass** die Grundplatte (1) als Teil eines Sitzkissenfederungssystems in einen Sitz integrierbar ist.

12. Drucksensor-Modul nach einem der Ansprüche 1 bis 11, **dadurch gekennzeichnet, dass** zwischen dem Foliendrucksensor (3) und der Abdeckplatte (14) oder zwischen der Grundplatte (1) und dem Foliendrucksensor (3) eine zumindest teilweise vollflächig aufgebrachte Klebeschicht (23) angeordnet ist.

13. Drucksensor-Modul nach Anspruch 12, **dadurch gekennzeichnet, dass** die zumindest teilweise vollflächig aufgebrachte Klebeschicht (23) im Bereich der Sensorelemente (4) eine Aussparung (24) aufweist.

14. Drucksensor-Modul nach einem der Ansprüche 1 bis 13, **dadurch gekennzeichnet, dass** zwischen der Abdeckplatte (14) und der Grundplatte (1) mindestens ein federndes Element eingebracht ist, das bei Druckbelastung einfedert und im unbelasteten Zustand für mechanische Entlastung des Foliendrucksensors (3) sorgt.

## Claims

1. Pressure sensor module for detecting the occupancy state of a seat, in particular of a motor vehicle seat, with a base plate (1) on which at least one film pressure sensor (3) is arranged, the film pressure sensor (3) comprising individual sensor elements (4), with at least one covering, compressible intermediate layer (8) and with a cover element covering the film pressure sensor (3), on its side opposite the base plate (1), wherein the cover element is formed from a dimensionally stable cover plate (14) which is movably guided in a direction perpendicular to the plane of the film pressure sensor (3) and is fixed in position in the directions perpendicular thereto, and wherein the cover plate (14) is guided on the base plate (1) by at least one pin (16) in a direction perpendicular to the plane of the film pressure sensor (3).

2. Pressure sensor module according to claim 1, **characterized in that** the at least one pin (16) is guided on the respective other part in an opening (17).

3. Pressure sensor module according to claim 1 or 2, **characterized in that** the free end of the at least one pin (16) is formed by spring arms (18) with locking elements (19), the locking elements (19) engaging in or on the associated opening (17).

4. Pressure sensor module according to one of claims 1 to 3, **characterized in that** the at least one pin is arranged in the edge region of the cover plate (14).

5. Pressure sensor module according to one of claims 1 to 4, **characterized in that** the cover plate (14) is formed of plastic.

6. Pressure sensor module according to one of claims 1 to 5, **characterized in that** the at least one intermediate layer (8) is arranged between base plate (1) and film pressure sensor (3) or between film pressure sensor (3) and cover plate (14).

7. Pressure sensor module according to one of claims 1 to 6, **characterized in that** the intermediate layer (8) has different compression hardnesses in thickness direction.

8. Pressure sensor module according to one of claims 1 to 7, **characterized in that** the intermediate layer (8) in the region of the respective sensor element (4) has a surface which is reduced in size and/or recessed (20, 21, 22) relative to the surface of the cover plate (14).

9. Pressure sensor module according to one of claims 1 to 8, **characterized in that** the film pressure sensor (3) has sensor elements (4) of different sensitivity.

10. Pressure sensor module according to claim 9, **characterized in that** the sensor elements (4) of different sensitivity are combined in groups and connected by means of series and parallel connection.

11. Pressure sensor module according to one of claims 1 to 10, **characterized in that** the base plate (1) can be integrated into a seat as part of a seat cushion suspension system.

12. Pressure sensor module according to one of claims 1 to 11, **characterized in that** an adhesive layer (23) which is applied at least partially over the entire surface is arranged between the film pressure sensor (3) and the cover plate (14) or between the base plate (1) and the film pressure sensor (3).

13. Pressure sensor module according to claim 12, **characterized in that** the adhesive layer (23) which is applied at least partially over the entire surface has a recess (24) in the region of the sensor elements (4).

14. Pressure sensor module according to one of claims 1 to 13, **characterized in that** at least one resilient element is inserted between the cover plate (14) and the base plate (1), which deflects under pressure load and provides mechanical relief of the film pressure sensor (3) in the unloaded state.

## Revendications

1. Module de capteur de pression permettant de détecter l'état d'occupation d'un siège, en particulier d'un siège de véhicule automobile, le module étant pourvu d'une plaque de base (1), sur laquelle au moins un capteur de pression à membrane (3) est agencé, dans lequel le capteur de pression à membrane (3) comporte différents éléments capteurs (4), d'au moins une couche intermédiaire (8) de recouvrement compressible, et d'un élément de recouvrement couvrant le capteur de pression à membrane (3), sur la face du capteur faisant face à la plaque de base (1), dans lequel l'élément de recouvrement est formé d'une plaque de recouvrement (14) indéformable, qui est guidée mobile dans une direction perpendiculaire au plan du capteur de pression à membrane (3) et qui est fixée en position dans les directions perpendiculaires audit plan, et dans lequel la plaque de recouvrement (14) est guidée sur la plaque de base (1) par au moins une broche (16) dans une direction perpendiculaire au plan du capteur de pression à membrane (3).

2. Module de capteur de pression selon la revendication 1, **caractérisé en ce que** la au moins une broche (16) est guidée sur l'autre partie respective dans une ouverture (17).

3. Module de capteur de pression selon la revendication 1 ou 2, **caractérisé en ce que** l'extrémité libre de la au moins une broche (16) est formée par des bras élastiques (18) pourvus d'éléments d'encliquetage (19), dans lequel les éléments d'encliquetage (19) s'accrochent dans ou à l'ouverture (17) associée.

4. Module de capteur de pression selon l'une quelconque des revendications 1 à 3, **caractérisé en ce que** la au moins une broche est agencée dans la zone marginale de la plaque de recouvrement (14).

5. Module de capteur de pression selon l'une quelconque des revendications 1 à 4, **caractérisé en ce que** la plaque de recouvrement (14) est formée de matière plastique.

6. Module de capteur de pression selon l'une quelconque des revendications 1 à 5, **caractérisé en ce que** la au moins une couche intermédiaire (8) est agencée entre la plaque de base (1) et le capteur de pression à membrane (3) ou entre le capteur de pression à membrane (3) et la plaque de recouvrement (14).

7. Module de capteur de pression selon l'une quelconque des revendications 1 à 6, **caractérisé en ce que** la couche intermédiaire (8) présente différentes résistances à la compression dans le sens de l'épaisseur.

8. Module de capteur de pression selon l'une quelconque des revendications 1 à 7, **caractérisé en ce que** la couche intermédiaire (8) présente dans la zone de l'élément capteur (4) respectif une surface qui est réduite et/ou évidée (20, 21, 22) par rapport à la surface de la plaque de recouvrement (14).

9. Module de capteur de pression selon l'une quelconque des revendications 1 à 8, **caractérisé en ce que** le capteur de pression à membrane (3) présente des éléments capteurs (4) de sensibilité différente.

10. Module de capteur de pression selon la revendication 9, **caractérisé en ce que** les éléments capteurs (4) de sensibilité différente sont rassemblés par groupes et raccordés au moyen d'un montage en série et en parallèle.

11. Module de capteur de pression selon l'une quelconque des revendications 1 à 10, **caractérisé en ce que** la plaque de base (1) peut être intégrée dans un siège en tant que partie d'un système de suspension de coussin de siège.

12. Module de capteur de pression selon l'une quelconque des revendications 1 à 11, **caractérisé en ce qu'**une couche adhésive (23) appliquée au moins en partie sur toute la surface est située entre le capteur de pression à membrane (3) et la plaque de recouvrement (14) ou entre la plaque de base (1) et le capteur de pression à membrane (3).

13. Module de capteur de pression selon la revendication 12, **caractérisé en ce que** la couche adhésive (23) appliquée au moins en partie sur toute la surface présente un évidement (24) dans la zone des éléments capteurs (4).

14. Module de capteur de pression selon l'une quelconque des revendications 1 à 13, **caractérisé en ce qu'**au moins un élément élastique, qui se comprime lors d'une contrainte de compression et qui, dans l'état non contraint, assure une décharge mécanique du capteur de pression à membrane (3), est introduit entre la plaque de recouvrement (14) et la plaque de base (1).
